# EUROPEAN PATENT APPLICATION

(11) **EP 2 495 426 A1**
(43) Date of publication of application: **05.09.2012**
(21) Application number: 12154394.6
(22) Date of filing: 08.02.2012
(51) Int. Cl.: F02M 35/12

(54) **Swirl guiding acoustic device with an internal coaxially integrated swirl guide structure**

(30) Priority: 01.03.2011 US 201113037448
(71) Applicant: Mann + Hummel GmbH, 71638 Ludwigsburg (DE)
(72) Inventor: Jasnie, Jasris, Kalamazoo, MI Michigan 49009 (US); Frost, Barry, Hamilton, MI Michigan 49419 (US)

(57) **Abstract**

A coaxially integrated swirl guiding acoustic device has an elongated annular housing with radially spaced outer and inner walls. At least one acoustic resonator chamber is enclosed between the outer and inner walls. A swirl guiding structure is coaxially arranged within an open interior of the housing (20) and secured to the inner wall (26) of the housing, the structure having at least one swirl guiding element configured to modify swirl characteristics of air flowing through the device.

## Description

### TECHNICAL FIELD

This disclosure relates to an airflow swirl guiding and acoustic dampening device with an internal coaxially integrated swirl guiding structure, particularly suitable for installation upstream of a turbocharger of an internal combustion engine.

### BACKGROUND OF THE INVENTION

Turbocharger equipped internal combustion engines are configured with an engine air intake tract into which a turbocharger compressor is arranged. The turbocharger compressor may be driven by an exhaust gas turbine, electric motor or other means and is operable to increase the pressure of the intake combustion air before it is delivered to the internal combustion engine. The addition of a turbocharger to an internal combustion engine may generally result in greater fuel economy and driver friendly vehicle performance characteristics.

For turbocharged engines the airflow swirl direction relative to the turbocharger impeller rotation is an important parameter in reducing turbo lag or preventing engine stall conditions. In turbocharger operation it is preferred for the airflow entering the turbocharger inlet to have a swirl direction that matches or at least is the same general direction as the rotation direction of the turbocharger compressor impellers. In cases where the intake air swirl direction is not aligned with or differs from the compressor impeller rotation direction then guiding vanes may be installed in the air intake tract upstream of the turbocharger compressor to correct the airflow swirl direction.

Undesired airflow swirl may be introduced by upstream components or the geometry of the air intake tract, for example, by the presence of bends and elbows in the air intake tract. Bends in the air intake tract are often necessary to meet limited installation space, air intake tract routing and under hood packaging constraints.

Turbochargers are also known to generate undesirable noise levels during operating conditions. To reduce turbocharger noise a sound muffling device such as a sound absorbent muffler or an acoustic resonator may be installed near the compressor on the intake side of the compressor to muffle or attenuate the turbo compressor impeller "whine".

There remains a need in the art for a device which integrates the function of an acoustic resonator integrated together with airflow swirl modification components into a minimal size package that is readily integrated into a very limited installation space.

### SUMMARY OF THE INVENTION

The present inventive disclosure describes an apparatus that provides acoustic attenuation and airflow swirl correction in an integrated coaxial package that may be installed directly into the air intake tract upstream of the inlet port of a turbocharger compressor. The present disclosure minimizes packaging size of such a solution by integrating airflow swirl correction into a broadband resonator to minimize manufacturing costs, packaging cost and provided the smallest required solution package space by coaxially integrating the switch correction structure into the interior of the acoustic resonator.

In various aspects of the invention a coaxially integrated swirl guiding acoustic device is provided which includes an elongated annular acoustic resonator having one or more resonator chambers and internally integrated swirl characteristic modify components.

The swirl guiding acoustic device includes an elongated annular housing extending around a longitudinal axis of the housing and includes an axially extending outer wall. A first end of the housing has an inlet for airflow and an opposing second end of the housing has an airflow outlet. An axially extending annular inner wall is arranged coaxially with and radially spaced from the outer wall. The inner wall defines an interior open central region in the housing through which the airflow is conducted.

At least one acoustic resonator chamber is enclosed between the inner and outer walls and is operable to attenuate a desired sound frequency spectrum of sound carried in the conducted airflow. The inner wall includes at least one aperture extending between the open central region and the at least one acoustic resonator chamber to place the resonator chambers in airflow communication with the open central region of the housing.

A swirl guiding structure is coaxially arranged within the open central region and interior to the housing having the resonator chambers, the structure includes at least one swirl guiding element configured to modify swirl characteristics of the conducted airflow.

According to another aspect of the invention, the swirl guiding elements are secured to the inner wall and extend radially inwardly into the open central region.

According to another aspect of the invention, the swirl guiding elements are integrally formed with and one piece with the inner wall of the housing.

According to another aspect of the invention, the air swirl guiding elements comprise radially arranged fins secured along a radially outward fin edge onto the inner wall of the housing. Each fin includes at least one airflow guiding surface extending between the inlet and outlet ends of the housing. Each fin includes at least one airflow guiding surface operable to deflect a portion of the conducted airflow thereby altering swirl characteristics of the conducted airflow.

According to another aspect of the invention, the airflow guiding surface is substantially aligned with the longitudinal axis of the swirl guiding acoustic device.

According to another aspect of the invention, a portion of the airflow guiding surface is slanted relative to the longitudinal axis of the swirl guiding acoustic device.

According to another aspect of the invention, the airflow guiding surface of the fins has a first portion proximate to the inlet end and second portion proximate to the outlet end of the housing. The first portion is substantially aligned with the longitudinal axis and the second portion is slanted relative to the longitudinal axis to deflect the airflow in a desired swirl direction.

According to another aspect of the invention, the airflow guiding surface has a smooth arcuate circular or elliptical arc shape relative to the longitudinal axis of the swirl guiding acoustic device.

According to another aspect of the invention, the fins have an inwardly extending length that is less than 1/2 of the diameter of the open central region of the resonator. An inwardly arranged edge of the fins defines an unobstructed region interior to and coaxial to the central region into which the fins do not extend.

According to another aspect of the invention, at least the swirl guiding structure and the inner housing wall comprises molded plastic.

According to another aspect of the invention, the swirl guiding acoustic device is integrated into an air induction system of an internal combustion engine. The air induction system includes an air cleaner filtering the intake airflow, a turbocharger compressing intake air, the turbocharger including a compressor impeller and a clean air duct having a first end in airflow communication with a clean air side of the air cleaner and receiving clean air from the air cleaner with an opposing second end connected to and conducting the airflow to an inlet port of the turbocharger. The swirl guiding acoustic device is arranged in the clean air duct. The swirl guiding elements of the swirl guiding acoustic device modify a swirl direction of the conducted airflow such that the modified swirl direction is substantially aligned with the operating rotation direction of the compressor impeller.

The above features and advantages and other features and advantages of the present invention are readily apparent from the following detailed description of the best modes for carrying out the invention when taken in connection with the accompanying drawings.

### BRIEF DESCRIPTION OF THE DRAWINGS

The accompanying figures where like reference numerals refer to identical or functionally similar elements throughout the separate views and which together with the detailed description below are incorporated in and form part of the specification, serve to further illustrate various embodiments and to explain various principles and advantages all in accordance with the present invention.

Features of the present invention, which are believed to be novel, are set forth in the drawings and more particularly in the appended claims. The invention, together with the further objects and advantages thereof, may be best understood with reference to the following description, taken in conjunction with the accompanying drawings. The drawings show a form of the invention that is presently preferred; however, the invention is not limited to the precise arrangement shown in the drawings.
FIG. 1 is a schematic representation of an internal combustion engine air intake tract delivering air into the inlet of a turbocharger including a coaxially integrated swirl guiding acoustic device, consistent with the present invention;
FIG. 2 is a schematic representation of an embodiment of the coaxially integrated swirl guiding acoustic device configured to modify or in some cases reverse airflow swirl direction according to an aspect of the present inventive disclosure;
FIG. 3 is a schematic representation of a coaxially integrated swirl guiding acoustic device configured to break the swirl of airflow in air intake tract according to another aspect of the prevent inventive disclosure; and
FIG. 4 depicts a swirl velocity profile of a coaxially integrated swirl guiding acoustic device configured to reverse airflow swirl direction according to one or more aspects of the present inventive disclosure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### DETAILED DESCRIPTION

Before describing in detail embodiments that are in accordance with the present invention, it should be observed that the embodiments reside primarily in combinations of apparatus components related to a swirl guiding acoustic device having an internal coaxially integrated swirl guiding structure. Accordingly, the apparatus components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises", "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

As discussed earlier, in intake air induction systems for turbocharged engines the airflow swirl direction relative to the turbocharger impeller rotation is an important parameter in reducing turbo lag or preventing engine stall conditions. In turbocharger operation it is preferred for the airflow entering the turbocharger inlet to have a swirl direction that at least generally matches the rotation direction of the turbocharger compressor impellers. Another known characteristic of turbochargers is that they are known to generate undesirable noise while in operation. A sound muffling sound device such as a broadband resonator may be installed on the intake side of the compressor to muffle or attenuate a desired frequency spectrum which may include the turbo "whine" and other compressor generated noises, reducing the transmission of turbocharger noise back through the air intake tract and reducing diffusion of turbocharger noise through the intake tract out into the environment.

Although the use of sound muffling devices such as broadband resonators and the use of vanes in the air intake tract to correct or influence airflow swirl are known in the art, the art fails to teach or disclose devices that integrate these acoustic compensation and swirl modification features into a single unitary device. Advantageously the swirl guiding acoustic device disclosed herein coaxially integrate a swirl guiding structure and acoustic resonator chamber(s) as a one-piece unitary device, thereby providing swirl correction and acoustic attenuation in device providing the smallest installation space requirements and is well adapted to requirements imposed by under the hood air intake tract routing.

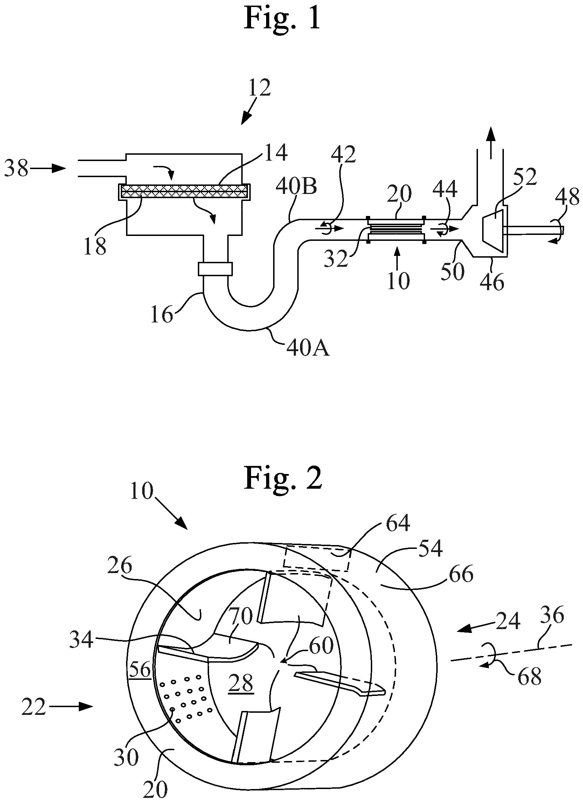

FIG. 1 is a schematic representation of an internal combustion engine air intake tract delivering air into a turbocharger, according to the present inventive disclosure. An air cleaner 12 receives intake air (arrows 38) into the inlet port of an air cleaner 12. Within the air cleaner 12 the air is confined to pass through the air filter element 14. Airflow exiting the clean air side 18 of the filter element 14 flows to the clean air duct 16.

As illustrated in FIG. 1, due to the non-linear configuration of the clean air duct 16 (for example, illustrated as bends and elbows 40A and 40B in FIG. 1) the airflow 38 may have a swirl component or a velocity component traverse to the elongation axis of the clean air duct 16 as indicated by first swirl direction arrow 42.

The clean air duct 16 delivers intake air to the turbocharger compressor 46. Turbocharger compressor 46 is shown with a compressor impeller 52 that rotates in a direction 48 that is counter to the first swirl direction 42. The swirl 42 characteristic of the intake airflow may be due to the routing and configuration of the clean air duct 16. The clean air duct routing may be fixed by the location of the compressor, air cleaner and other components under the vehicle hood and therefore another means may be required to change the swirl characteristics of the intake air flow before it reaches the turbocharger 46.

As noted earlier above, in turbocharger operation it is preferred for the airflow entering the turbocharger inlet 50 to have a swirl direction that matches the rotation direction 48 of the turbocharger compressor impeller 52.

Additionally, operation of the turbocharger compressor 46 may generate undesirable noise during certain operating conditions. Turbocharger noise may be conducted back along the clean air duct and may also radiate from the walls of the clean air duct 16 into the environment. It is desirable to reduce or attenuate this noise.

According to the invention, a swirl guiding acoustic device 10 is arranged in and along a portion of the length of the clean air duct 16 in a position upstream of the turbocharger compressor 46, and preferably within a short distance of the turbocharger 46 inlet port 50, preferably with a straight duct section 62 between the coaxially integrated swirl guiding acoustic device 10 and the inlet port 50 of the turbocharger compressor 46. Avoiding bends, elbows or other restrictions between the swirl guiding acoustic device 10 and the turbocharger 46 prevents alteration of the swirl pattern introduced by the swirl guiding acoustic device 10.

The swirl guiding acoustic device 10 includes a broadband acoustic resonator 20 having one or more resonator chambers operable to attenuate selected sound frequency spectrum(s) as a countermeasure to noise generated by operation of the compressor 46. The device 10 further includes a swirl guiding structure 32 configured to modify the swirl direction or swirl characteristics of an intake air flow 42 flowing through the swirl guiding acoustic device 10. In some embodiments, the swirl guiding acoustic device 10 is configured to reverse the direction of the swirl 42 to swirl direction 44 substantially matching the rotation direction 48 of the turbocharger compressor impeller 52. In other embodiments the swirl guiding acoustic device 10 may be configured to break the swirl direction 42 of the intake air flow.

Now referring to FIG. 2. FIG. 2 is a schematic representation of one embodiment of the coaxially integrated swirl guiding acoustic device 10 configured to modify or in some cases reverse the airflow swirl direction according to an aspect of the present inventive disclosure.

The coaxially integrated swirl guiding acoustic device 10 includes an elongated tubular housing 20 which encloses one or more acoustic resonator chambers between an outer wall 54 and a coaxial arranged inner wall 26 spaced radially inwardly from the outer wall 54. interior to the inner wall 26 is an open central region 28 through which air flows between the inlet end 22 and outlet end 24 of the coaxially integrated swirl guiding acoustic device 10.

An enclosed annular volume is defined in the tubular resonator housing 20 between the outer wall 54 and inner wall 26 and is closed on the opposing inlet end 22 and the outlet end 24 by annular end walls 56 (only one end wall 56 at the inlet end 22 is shown. End wall 56 at outlet end 24 is arranged similarly.) The enclosed volume defines and includes at least one acoustic resonator chamber formed between the inner wall 26 and outer wall 54. A plurality of resonator chambers may be formed in the enclosed volume by providing, for example, partition walls 64 extending between the outer wall 54 and inner wall 26 and dividing the enclosed volume sub volumes forming acoustic chambers. Partition walls 64 may be arranged anywhere within the annular volume 66 as needed to provide acoustic chambers with the desired acoustic volumes as required to provide the desired acoustic characteristics of the annular acoustic resonator 20.

As shown in FIG. 2, the inner wall 26 of the elongated annular housing 20 includes one or more apertures 30 extending through the inner wall 26 and fluidically connecting the open central region 28 of the elongated annular housing 20 to the acoustic resonator chamber(s) formed in the annular volume 66 within the housing. A grouping of apertures 30 is schematically shown in FIG. 2. It is to be noted that apertures 30 may be provided at any location on the inner wall 26 of the housing 20 as required to fluidically connect acoustic chamber(s) within the housing 20 with the open central region 28.

Also as shown in FIG. 2, the coaxially integrated swirl guiding acoustic device 10 includes a swirl guiding structure arranged within the open central region 28 and is secured to the inner wall 26 of the housing 20. The swirl guiding structure includes a plurality of radially aligned swirl guiding elements 60 each secured at a radially outwardly arranged edge onto or formed integrally in one piece with the inner wall 26 of the elongated housing 20. The swirl guiding elements 60 extend radially inwardly from the inner wall 26 into the open central region 28.

Each swirl guiding element 60 has at least one generally axially arranged airflow guiding surface 34 which extends on the swirl guiding element 60 between the inlet end 22 and outlet end 24 of the elongated annular housing 20. The airflow guiding surface is substantially aligned with a longitudinal axis 36 of the housing 20 and tangentially guides the airflow flowing through the swirl guiding device 10 to induce a desired swirl direction to airflow exiting the swirl guiding device 10 at the outlet end 24. In the specific embodiment illustrated in FIG. 2, the swirl guiding elements 60 are shaped and configured as airflow guiding fins.

When it is desired to introduce a swirl into the airflow, the airflow guiding surfaces 34 may be configured with a slant relative to the longitudinal axis 36 of the swirl guiding acoustic device 10. As shown in FIG. 2, the airflow guiding surface 34 transitioning to the slanted downstream portion 70 is preferably smoothly curved, forming a gradual transition between the leading portion of the airflow guiding surface 34 and the slanted portion 70. Preferably the slanted portion 70 may be configured as a smooth arcuate circular or elliptical arc contour relative to the longitudinal axis 36 of the swirl guiding acoustic device 10 to provide a smoothly curved surface without abrupt changes in shape, particularly in the airflow direction. To minimize airflow disturbances and pressure drop it is preferred to configure the leading portion of the airflow guiding surface 34 of the swirl guiding element 60 to be substantially aligned with the velocity or vector direction of airflow entering the swirl guiding acoustic device 10.

As shown in FIG. 2 at least the downstream portion (portion proximate to outlet end 24) of the airflow guiding surfaces 34 has a slant configured to deflect the airflow and provide a desired swirl flow characteristic to the airflow. The slant on the downstream portion of the airflow guiding surfaces 34 applies a deflection force to the airflow to induce the desired circular swirl characteristic to the airflow. In FIG. 2, the inducted swirl direction would be substantially clockwise 68 relative to the longitudinal axis 36 of the coaxially integrated swirl guiding acoustic device 10. The number of swirl guiding elements 60 implemented and the configuration of the airflow guiding surface(s) of the swirl guiding elements may be altered depending upon the application the swirl severity. As few as two swirl guiding elements 60 can be sufficient. As is known to those skilled in the art, swirl is quantified by a swirl number which is a measure of tangential to axial airflow momentum.

In the embodiment of FIG. 2 the swirl guiding elements 60 are not connected together but instead are spaced apart and radially spaced outwardly from the central longitudinal axis 36, forming an unobstructed open region interior to and coaxial with the central region 28 of the elongated annular housing 20.

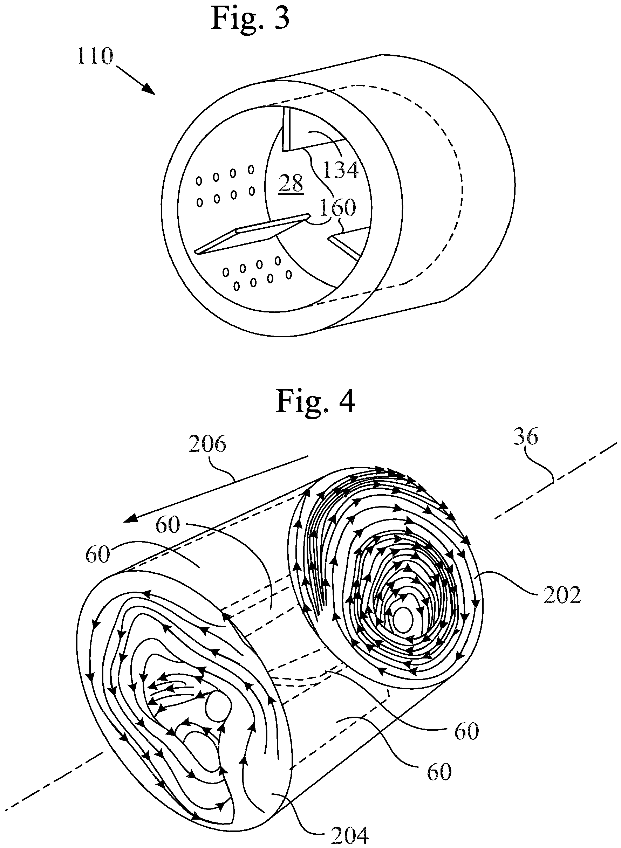

FIG. 3 depicts an alternate embodiment of the coaxially integrated swirl guiding acoustic device 10 of FIG. 2. In FIG. 3 the airflow guiding surface 134 of the swirl guiding elements 160 is substantially planar or flat. The airflow guiding surface 134 extends radially into the open interior 28 of the swirl guiding acoustic device 110 with the effect that the swirl guiding acoustic device 110 is configured to break the swirl 42 of the intake air flow 38.

FIG. 4 illustrates a computational fluid dynamics (CFD) model of airflow swirl in a coaxially integrated swirl guiding acoustic device configured to change or reverse swirl direction, such as shown in and discussed with FIG. 2. Arrow 206 illustrates the general direction of airflow through the coaxially integrated swirl guiding acoustic device 10 from the inlet end 22 to the outlet end 24 (see FIG. 2).

In the CFD swirl prediction model illustrated in FIG. 4, the airflow swirl at the inlet end (22, see FIG. 2) is shown in swirl plot 202 which illustrates the airflow at the inlet end 22 having a clockwise swirl rotation when viewed from the outlet end 24 of the coaxially integrated swirl guiding acoustic device 10.

In FIG. 4, the airflow swirl guiding elements 60 with arcuate slanted portions are configured to deliver airflow at the outlet end 24 having a substantially counterclockwise swirl direction, the outlet swirl direction substantially reversed from the swirl direction at the intake end 22, as depicted in the swirl plot 204.

In the foregoing specification, specific embodiments of the present inventtion have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

## Claims

1. A coaxially integrated swirl guiding acoustic device (10), comprising an elongated annular housing (20) extending around a longitudinal axis and including
an axially extending outer wall (54);
an inlet end (22) on a first end of said housing (20) receiving airflow into said device (10) ;
an axially extending annular inner wall (26) arranged coaxially with and radially spaced from said outer wall (54), said inner wall (26) defining an interior open central region (28) through which said airflow (38) is conducted through said housing (20);
at least one acoustic resonator chamber is enclosed between said inner (26) and outer walls (54), said at least one acoustic resonator chamber operable to attenuate a desired sound frequency spectrum of sound carried in said conducted airflow (38),
wherein said inner wall (26) includes at least one aperture (30) fluidically connecting and extending between said open central region (28) and said at least one acoustic resonator chamber;
an airflow swirl guiding structure coaxially arranged within said open central region (28) and interior to said resonator (20), said structure comprising at least one swirl guiding element (60) configured to modify swirl characteristics of said conducted airflow (38).

2. The swirl guiding acoustic device (10) according to claim 1, wherein said at least one swirl guiding element (60) is secured to said inner wall (26) and extends radially inwardly into said open central region (28).

3. The swirl guiding acoustic device (10) according to claim 1, wherein said at least one swirl guiding element (60) is integrally formed with and one piece with said inner wall (26) of said housing (20).

4. The swirl guiding acoustic device (10) according to claim 1, wherein
said air swirl guiding elements (60) comprise radially arranged fins secured along a radially outward fin edge onto said inner housing wall (26),
wherein each fin includes at least one airflow guiding surface (34) extending between said housing inlet (22) and outlet ends (24),
wherein said at least one airflow guiding surface (34) deflects a portion of said conducted airflow (38) altering swirl characteristics of said conducted airflow (38).

5. The swirl guiding acoustic device (10) according to claim 4, wherein said at least one airflow guiding surface (34) is substantially aligned with said longitudinal axis.

6. The swirl guiding acoustic device (10) according to claim 4, wherein at least a portion of said at least one airflow guiding surface (34) is slanted relative to said longitudinal axis of said swirl guiding acoustic device (10).

7. The swirl guiding acoustic device (10) according to claim 4, wherein
said at least one airflow guiding surface (34) of said fins has a first portion proximate to said inlet end (22) and second portion proximate to said outlet end (24),
wherein said first portion is substantially aligned with said longitudinal axis,
wherein said second portion is slanted relative to said longitudinal axis of said swirl guiding acoustic device (10) and is operable to deflect said airflow modifying said swirl characteristics.

8. The swirl guiding acoustic device (10) according to claim 6, wherein said at least one airflow guiding surface (34) has a smooth arcuate circular or elliptical arc shape relative to said longitudinal axis.

9. The swirl guiding acoustic device (10) according to claim 6, wherein
said fins have an inwardly extending length that is less than 1/2 of the diameter of said open central region (28) of said resonator (20),
wherein an inwardly arranged edge of said fins defines an unobstructed region interior to and coaxial to said open central region (28) into which said fins do not extend.

10. The swirl guiding acoustic device (10) according to claim 6, wherein at least said swirl guiding structure (32) and said inner wall (26) comprise molded plastic.

11. An air induction system conducting intake airflow to an internal combustion engine, said air induction system comprising:
an air cleaner (12) filtering said intake airflow;
a turbocharger (46) compressing said intake air, said turbocharger (46) including a compressor impeller (52);
a clean air duct (16) having a first end in airflow communication with a clean air side (18) of said air cleaner (12) and receiving clean air from said air cleaner (12);
an opposing second end of said clean air duct (16) is connected to and conducts said airflow (38) to an inlet port (50) of said turbocharger (46);
said swirl guiding acoustic device (10) according to claim 1, said swirl guiding acoustic device (10) arranged in said clean air duct (16);
wherein said turbocharger impeller (52), in operation, has a first direction of rotation,
wherein said swirl guiding elements (60) of said swirl guiding acoustic device (10) modify a swirl direction (42) of said conducted airflow (38) such that said modified swirl direction (42) is substantially aligned with said first direction of rotation.
